# EUROPÄISCHE PATENTSCHRIFT

(11) **EP 3 804 486 B1**
(45) Veröffentlichungstag und Bekanntmachung des Hinweises auf die Patenterteilung: **29.05.2024**
(21) Anmeldenummer: 20199985.1
(22) Anmeldetag: 05.10.2020
(51) Int. Cl.: A01B 69/00, A01B 79/00, B60W 30/02, B60W 40/10, B60W 40/11, B60W 40/112, B60W 40/114

(54) **ARBEITSFAHRZEUG FÜR DEN EINSATZ IN DER LANDWIRTSCHAFT UND VERFAHREN ZU DESSEN STEUERUNG**
AGRICULTURAL WORKING VEHICLE AND METHOD OF CONTROLLING SAME
ENGIN DE TRAVAIL POUR L'AGRICULTURE ET SON PROCÉDÉ DE COMMANDE

(30) Priorität: 09.10.2019 DE 102019127129
(43) Veröffentlichungstag der Anmeldung: 14.04.2021
(73) Patentinhaber: ZF CV Systems Global GmbH, 3006 Bern (CH)
(72) Erfinder: KAMISCHKE, Waldemar, 31535 Neustadt (DE); SABELHAUS, Dennis, 31737 Rinteln (DE)
(74) Vertreter: ZF Friedrichshafen AG

(56) Entgegenhaltungen:
- EP-A1- 3 352 141
- DE-A1-102006 050 126
- DE-A1-102016 214 547
- DE-U1-202015 106 595
- US-A1- 2007 067 085
- US-A1- 2018 267 553

## Beschreibung

Die Erfindung betrifft ein Arbeitsfahrzeug für den Einsatz in der Landwirtschaft, an dessen Fahrzeugfront und/oder Fahrzeugheck ein seitlich ausladendes Arbeitsgerät montierbar ist, mit einem elektronisch steuerbaren Antriebsmotor, einer elektronisch steuerbaren Bremsanlage, einer Sensoranordnung zur Messung von Drehbewegungen und/oder Drehschwingungen um mindestens eine Bezugsachse des Arbeitsfahrzeugs und mit einem elektronischen Steuergerät zur Auswertung von Sensordaten der Sensoranordnung sowie zur Ansteuerung des Antriebsmotors und/oder der Bremsanlage. Die Erfindung betrifft außerdem ein Verfahren zur Steuerung eines entsprechenden Arbeitsfahrzeugs, mit dem Drehbewegungen um mindestens eine Bezugsachse des Arbeitsfahrzeugs gedämpft werden können.

An Arbeitsfahrzeugen, die für einen Einsatz in der Landwirtschaft vorgesehen sind, wie beispielsweise Ackerschlepper und Mähdrescher, können an der Fahrzeugfront und/oder am Fahrzeugheck Arbeitsgeräte, wie etwa Mähwerke oder Spritzgestänge montiert werden, deren seitliche Abmessungen die Breite des Arbeitsfahrzeugs übersteigen. Wenn ein Arbeitsfahrzeug mit einem derartigen Arbeitsgerät im Arbeitseinsatz unebenes Gelände, wie eine Wiese oder ein Feld, befährt, können Bodenerhebungen und Bodensenken Drehbewegungen und Drehschwingungen des Arbeitsfahrzeugs sowie des Arbeitsgerätes um dessen Querachse, also Nickbewegungen sowie Nickschwingungen, um dessen Längsachse, also Rollbewegungen und Rollschwingungen, und um dessen Hochachse, also Gierbewegungen und Gierschwingungen, verursachen. Hierdurch kann es insbesondere an den Außenabschnitten des jeweiligen Arbeitsgerätes zur Bodenberührung kommen, die zur Beschädigung des Arbeitsgerätes sowie zur Verunreinigung von Erntegut, wie Gras, Raps oder Getreide, mit Erde und Steinen führen. Die vorhandenen Verunreinigungen müssen dann aufwändig aus dem Erntegut entfernt werden. Auch können in dem Arbeitsgerät angeregte Schwingungen zu vorzeitigem Verschleiß und Ermüdungsbrüchen an demselben führen. Das Arbeitsgerät muss dann unter entstehen einer Ausfalldauer repariert werden. Ebenso können angeregte Nick-, Roll- oder Gierbewegungen oder Gierschwingungen eine ungleichmäßige Verteilung von flüssigen oder granulatförmigen Wirkstoffen, wie Düngemittel oder Pflanzenschutzmitteln, auf der betreffenden Wiese oder dem Feld bewirken. Es besteht daher ein Bedarf, derartige Drehbewegungen und Drehschwingungen eines Arbeitsfahrzeugs beziehungsweise von dessen Arbeitsgerät sensorisch zu erfassen und in geeigneter Weise zu begrenzen oder zu dämpfen.

In der DE 39 42 057 A1 ist eine landwirtschaftliche Arbeitsmaschine mit einem am Fahrzeugheck gelenkig montierten Arbeitsgerät beschrieben, das über eine hydraulische Stellvorrichtung angehoben und abgesenkt werden kann. Wenn sich das Arbeitsgerät in seiner Transportstellung befindet und die Arbeitsmaschine eine vorgegebene Fahrgeschwindigkeit erreicht oder überschritten hat, ist eine Schwingungsdämpfungseinrichtung aktivierbar, mit der auftretende Nickschwingungen durch eine vertikale Bewegung des Arbeitsgerätes gedämpft werden.

Aus der DE 10 2006 023 603 B4 ist eine mobile Arbeitsmaschine mit einem an der Fahrzeugfront und/oder dem Fahrzeugheck gelenkig montierten Arbeitsgerät bekannt, das mittels einer hydraulischen Stellvorrichtung seitlich verschwenkt werden kann. Wenn sich das Arbeitsgerät in seiner Transportstellung befindet, ist eine Dämpfungseinrichtung aktivierbar, durch die das Arbeitsgerät in Abhängigkeit eines sensorisch erfassten Giermomentes in dieselbe Richtung, also bei einer Kurvenfahrt ins Kurveninnere, verschwenkt und damit ein Übersteuern der Arbeitsmaschine verhindert wird.

In der DE 10 2010 054 103 A1 ist eine mobile Arbeitsmaschine mit einem an der Fahrzeugfront und/oder dem Fahrzeugheck gelenkig montierten Arbeitsgerät offenbart, welches mittels einer hydraulischen Stellvorrichtung vertikal und seitlich verstellbar ist. Im Fahrbetrieb ist zur Verhinderung oder Dämpfung von Roll-, Nick- oder Gierbewegungen der Arbeitsmaschine vorgesehen, dass das Arbeitsgerät in geeigneter Weise angehoben, abgesenkt und/oder quer zur Fahrtrichtung geschwenkt wird.

Die vorgenannten Vorrichtungen und Verfahren zur Stabilisierung einer Arbeitsmaschine sind auf die Anwendung bei Transport- und Überführungsfahrten beschränkt und können daher bei Arbeitsfahrten, bei denen das betreffende Arbeitsgerät im Einsatz ist, nicht genutzt werden.

Aus DE 10 2016 214 547 A1 ist eine Dämpfungsvorrichtung zum Dämpfen einer durch Unebenheiten des befahrenen Untergrunds verursachten Nickbewegung eines Kraftfahrzeugs bekannt. Dabei wird ein Steuerungssignals durch auf Basis eines Ergebnisses des Erkennens der Nickbewegung bestimmt.

US 2007/067085 A1 betrifft eine Fahrzeugsteuersystem mit einem Steuergerät, das ausgelöst durch ein Fahrdynamiksignal eine Rollcharakteristik des Fahrzeugs bestimmt und in Antwort darauf ein Steuersignal bestimmt.

DE 10 2017 201 040 A1 offenbart ein Verfahren zur Erfassung und/oder Dokumentation des Betriebs einer mit einem Arbeitsfahrzeug koppelbaren Anbauvorrichtung, gemäß dem mit Sensoren gewonnene Arbeitsdaten einer jeweiligen im Arbeitseinsatz angekoppelten Anbauvorrichtung über ein Telematiksystem erfass- und/oder dokumentierbar sind.

DE 20 2015 106 595 U1 schlägt ein Stabilisierungssystem für einen Fahrzeuganhänger vor, bei dem die Betätigung eines Bremsaktuators in Abhängigkeit von der momentanen Masse und/oder Beladung des Fahrzeuganhängers gesteuert ist.

Dagegen ist aus der DE 10 2012 216 275 A1 ein Arbeitsfahrzeug mit einer Steuerungseinrichtung zur Dämpfung einer Nickbewegung bekannt, das auch bei einer Arbeitsfahrt zur Anwendung kommen kann. Diese Steuerungseinrichtung ist dazu ausgebildet, eine Nickbewegung des Arbeitsfahrzeugs sensorisch zu erfassen und abhängig von der erfassten Nickbewegung ein in den Antriebsstrang des Arbeitsfahrzeugs einsteuerbares Zusatzmoment zu bestimmen, mit dem die Nickbewegung des Arbeitsfahrzeugs gedämpft werden kann. Die Einsteuerung des Zusatzmomentes in den Antriebsstrang kann durch eine entsprechende Ansteuerung des Antriebsmotors, des Fahrgetriebes oder der Bremsanlage erfolgen.

Eine weitere Steuerungseinrichtung zur Dämpfung einer Nickbewegung eines Arbeitsfahrzeugs, die auch bei einer Arbeitsfahrt zur Anwendung kommen kann, ist aus der DE 10 2015 205 509 A1 bekannt. Diese Steuerungseinrichtung umfasst Mittel zur Erkennung einer vorhandenen oder zu erwartenden Nickschwingung und mindestens einen Aktor zur Beeinflussung der Fahrgeschwindigkeit des Arbeitsfahrzeugs. Der Aktor wird derart angesteuert, dass das Arbeitsfahrzeug beschleunigt wird, wenn sich das Arbeitsfahrzeug nach vorne neigt, und verzögert wird, wenn sich das Arbeitsfahrzeug nach hinten neigt. Die Nickschwingung des Arbeitsfahrzeugs wird somit durch eine dynamische Verlagerung des Fahrzeugschwerpunktes nach hinten oder vorne gedämpft.

Die in den beiden zuletzt genannten Druckschriften offenbarten Vorrichtungen und Verfahren zur Stabilisierung eines Arbeitsfahrzeugs sind auf die Dämpfung von Nickbewegungen sowie Nickschwingungen beschränkt und hinsichtlich ihrer konkreten Ausbildung unzureichend beschrieben.

Daher Iag der Erfindung die Aufgabe zugrunde, ein Arbeitsfahrzeug mit einer Sensoranordnung und einem elektronischen Steuergerät der eingangs genannten Art vorzustellen, mit denen Drehbewegungen und/oder Drehschwingungen des Arbeitsfahrzeugs um alle relevanten Bezugsachsen eines Fahrzeugs erfasst werden können, und mit denen der Antriebsmotor und/oder die Bremsanlage des Arbeitsfahrzeugs in geeigneter Weise angesteuert werden kann, um die jeweilige Drehbewegung und/oder Drehschwingung zu dämpfen. Des Weiteren sollte ein Verfahren zur Steuerung eines entsprechenden Arbeitsfahrzeugs vorgestellt werden, mit dem Drehbewegungen um mindestens eine Bezugsachse des Arbeitsfahrzeugs gedämpft werden können.

Die vorrichtungsbezogene Aufgabe ist durch ein Arbeitsfahrzeug mit den Merkmalen des Anspruchs 1 gelöst. Vorteilhafte Ausgestaltungen und Weiterbildungen des erfindungsgemäßen Arbeitsfahrzeugs sind Gegenstand der abhängigen Vorrichtungsansprüche.

Die Erfindung betrifft demnach ein Arbeitsfahrzeug für den Einsatz in der Landwirtschaft, an dessen Fahrzeugfront und/oder Fahrzeugheck ein seitlich ausladendes Arbeitsgerät montierbar ist, mit einem elektronisch steuerbaren Antriebsmotor, einer elektronisch steuerbaren Bremsanlage, einer Sensoranordnung zur Messung von Drehbewegungen und/oder Drehschwingungen um mindestens eine Bezugsachse des Arbeitsfahrzeugs, und mit einem elektronischen Steuergerät zur Auswertung von Sensordaten der Sensoranordnung sowie zur Ansteuerung des Antriebsmotors und/oder der Bremsanlage.

Zur Lösung der vorrichtungsbezogenen Aufgabe ist bei diesem Arbeitsfahrzeug vorgesehen, dass die Sensoranordnung mindestens einen Sensor zur Messung von Drehbewegungen und/oder Drehschwingungen um die Querachse des Arbeitsfahrzeugs, mindestens einen Sensor zur Messung von Drehbewegungen und/oder Drehschwingungen um die Längsachse des Arbeitsfahrzeugs sowie mindestens einen Sensor zur Messung von Drehbewegungen und/oder Drehschwingungen um die Hochachse des Arbeitsfahrzeugs aufweist. Außerdem ist vorgesehen, dass dem elektronischen Steuergerät ein elektronischer Datenspeicher zugeordnet ist, in dem Grenzwerte für eine Drehbewegung und/oder eine Drehschwingung um die Querachse, die Längsachse und Hochachse des Antriebsfahrzeugs abgespeichert sind. Zudem ist das elektronische Steuergerät derartig ausgebildet, dass es aus den sensorisch erfassten Messwerten von Drehbewegungen und/oder Drehschwingungen diesbezügliche Kennwerte für die jeweilige Drehbewegung beziehungsweise Drehschwingung um die Querachse, die Längsachse und die Hochachse bestimmen kann, dass es in Abhängigkeit von mindestens einem dieser Kennwerte und des zugeordneten Grenzwertes entscheiden kann, ob eine Verringerung der Fahrgeschwindigkeit erforderlich ist, und dass bei einer diesbezüglich positiven Entscheidung den Antriebsmotor und/oder die Bremsanlage derart ansteuern kann, dass die Fahrgeschwindigkeit bis zum Erreichen oder Unterschreiten des betreffenden Grenzwertes durch den Kennwert reduziert wird.

Durch die erfindungsgemäße Ausbildung der Sensoranordnung können Nickbewegung und/oder Nickschwingungen, Rollbewegungen und/oder Rollschwingungen sowie Gierbewegungen und/oder Gierschwingungen des Arbeitsfahrzeugs sensorisch gemessen und in dem elektronischen Steuergerät zu jeweils einem Kennwert verarbeitet werden. Durch Vergleich des jeweiligen Kennwertes mit einem vorgegebenen Grenzwert kann entschieden werden, ob die betreffende Drehbewegung beziehungsweise Drehschwingung durch eine Reduzierung der Fahrgeschwindigkeit des Arbeitsfahrzeugs begrenzt oder gedämpft werden soll. Bei positiver Entscheidung können der Antriebsmotor und/oder die Bremsanlage in geeigneter Weise angesteuert werden, um die jeweilige Drehbewegung und/oder Drehschwingung zu dämpfen.

Im Gegensatz zu den bislang bekannten Vorrichtungen eines Arbeitsfahrzeugs sind die Sensoranordnung und das elektronische Steuergerät derart ausgebildet, Drehbewegungen und/oder Drehschwingungen des Arbeitsfahrzeugs um alle relevanten Bezugsachsen beziehungsweise Raumachsen zu erfassen und diese durch eine Reduzierung der Fahrgeschwindigkeit des Arbeitsfahrzeugs zu dämpfen.

Das Arbeitsfahrzeug kann derart ausgebildet sein, dass das elektronische Steuergerät derart ausgebildet ist, dass es die Grenzwerte für eine Drehbewegung und/oder eine Drehschwingung um die Querachse, um die Längsachse und um die Hochachse des Arbeitsfahrzeugs anhand von sensorisch erfassten Daten selbsttätig bestimmen sowie eine Erkennung des jeweils angebauten Arbeitsgerätes selbsttätig durchführen und in dem elektronischen Datenspeicher abspeichern kann.

Alternativ dazu oder zusätzlich kann auch vorgesehen sein, dass ein Eingabegerät vorgesehen ist, in das ein Fahrer des Arbeitsfahrzeugs eine Kennung des angebauten Arbeitsgeräts, die Beschaffenheit des zu befahrenden Geländes sowie die Grenzwerte für eine Drehbewegung und/oder Drehschwingung um die Querachse, um die Längsachse und um die Hochachse des Arbeitsfahrzeugs manuell eingeben sowie in dem elektronischen Datenspeicher abspeichern kann.

Die Sensoranordnung zur Erfassung der Drehbewegungen und/oder Drehschwingungen um die Querachse, um die Längsachse und um die Hochachse des Arbeitsfahrzeugs kann Bestandteil eines vorhandenen ESC-Moduls sein (ESC = Electronic Stability Control) sein. ESC-Module sind in modernen Ackerschleppern und Mähdreschern schon serienmäßig oder zumindest optional enthalten.

Das elektronische Steuergerät beziehungsweise die Steuerungsfunktion zur Erfassung und Dämpfung der Drehbewegungen und/oder Drehschwingungen um die Querachse, Längsachse und Hochachse des Arbeitsfahrzeugs kann in einer vorhandenen Geschwindigkeitsregelanlage integriert sein. Auch Geschwindigkeitsregelanlagen sind in modernen Ackerschleppern und Mähdreschern schon serienmäßig oder optional verfügbar.

Die Erfindung betrifft auch ein Verfahren zur Lösung der eingangs genannten verfahrenstechnischen Aufgabe, welches im unabhängigen Verfahrensanspruch definiert ist. Vorteilhafte Ausgestaltungen und Weiterbildungen dieses Steuerungsverfahrens sind Gegenstand der abhängigen Ansprüche.

Demnach dient das Verfahren zur Steuerung eines Arbeitsfahrzeugs für den Einsatz in der Landwirtschaft, an dessen Fahrzeugfront und/oder Fahrzeugheck ein seitlich ausladendes Arbeitsgerät montierbar ist, und welches einen elektronisch steuerbaren Antriebsmotor, eine elektronisch steuerbare Bremsanlage, eine Sensoranordnung zur Erfassung von Drehbewegungen und/oder Drehschwingungen um mindestens eine der Bezugsachsen des Arbeitsfahrzeugs, und ein elektronisches Steuergerät zur Auswertung von Sensordaten der Sensoranordnung sowie zur Ansteuerung des Antriebsmotors und/oder der Bremsanlage aufweist.

Gemäß dem Verfahren ist vorgesehen, dass eine Drehbewegung und/oder eine Drehschwingung um die Querachse, um die Längsachse und/oder um die Hochachse des Arbeitsfahrzeugs sensorisch gemessen werden, dass jeweils ein Kennwert der gemessenen Drehbewegung und/oder Drehschwingung bestimmt wird, dass dieser Kennwert mit einem vorgegebenen Grenzwert verglichen wird, und dass dann, wenn der Kennwert den abgespeicherten Grenzwert überschreitet, die Fahrgeschwindigkeit des Arbeitsfahrzeugs so lange reduziert wird, bis der Kennwert den Grenzwert erreicht oder unterschritten hat.

Der Kennwert der gemessenen Drehbewegung um die Querachse, um die Längsachse oder um die Hochachse des Arbeitsfahrzeugs wird jeweils bevorzugt als Drehgeschwindigkeit oder als Drehbeschleunigung der Drehbewegung bestimmt und mit einem als Grenzdrehgeschwindigkeit beziehungsweise als Grenzdrehbeschleunigung vorgegebenen Grenzwert verglichen.

Der Kennwert der gemessenen Drehschwingung um die Querachse, um die Längsachse oder um die Hochachse des Arbeitsfahrzeugs wird jeweils als Schwingungsamplitude oder als RMS-Wert (RMS = Root Mean Square = quadratischer Mittelwert) der Drehschwingung bestimmt sowie mit einem als Grenzschwingungsamplitude beziehungsweise als RMS-Grenzwert vorgegebenen Grenzwert verglichen.

Um eine Störung der Sensorsignale durch hochfrequente Vibrationen des Arbeitsfahrzeugs oder des Arbeitsgerätes zu vermeiden, die zumeist durch mechanische Unwuchten erzeugt werden, ist es sinnvoll, wenn die Sensorsignale zu der Drehbewegung und/oder zu der Drehschwingung um die Querachse, um die Längsachse oder um die Hochachse des Arbeitsfahrzeugs vor deren Auswertung in dem elektronischen Steuergerät jeweils tiefpassgefiltert werden.

Die Fahrgeschwindigkeit des Arbeitsfahrzeugs kann kontinuierlich reduziert werden, bis der Kennwert der Drehbewegung und/oder der Drehschwingung den betreffenden Grenzwert erreicht oder unterschritten hat. Diese Vorgehensweise kann jedoch zu einer zu starken Reduzierung der Fahrgeschwindigkeit des Arbeitsfahrzeugs führen, da die Auswertung der Sensordaten und die Ansteuerung des Antriebsmotors und/oder der Bremsanlage eine gewisse Zeit in Anspruch nehmen.

Alternativ dazu kann die Fahrgeschwindigkeit des Arbeitsfahrzeugs daher auch stufenweise reduziert werden, bis der Kennwert der Drehbewegung und/oder der Drehschwingung den betreffenden Grenzwert erreicht oder unterschritten hat. Hierdurch steht jeweils genügend Zeit für die Auswertung der Sensordaten und die Ansteuerung des Antriebsmotors und/oder der Bremsanlage zur Verfügung, bevor bedarfsweise die nächste Stufe zur Reduzierung der Fahrgeschwindigkeit umgesetzt wird.

Weiter kann vorgesehen sein, dass zur Reduzierung der Fahrgeschwindigkeit des Arbeitsfahrzeugs das von dem Antriebsmotor abgegebene Drehmoment und/oder die Motordrehzahl des Antriebsmotors verringert wird.

Alternativ dazu oder zusätzlich kann vorgesehen sein, dass die Fahrgeschwindigkeit des Arbeitsfahrzeugs durch eine solche Ansteuerung der Bremsanlage reduziert wird, welche zu einer Betätigung der Betriebsbremsen mindestens eines Bremskreises der Bremsanlage führt. Dies setzt jedoch eine elektronisch steuerbare Bremsanlage voraus, bei der die Betriebsbremsen mindestens eines Bremskreises unabhängig von der Betriebsstellung eines Fußbremsventils betätigbar sind. Mehrere Ausführungen zu einer derartigen Druckluftbremsanlage sind beispielsweise aus der DE 10 2017 009 954 A1 bekannt.

Die Erfindung wird nachstehend anhand eines in der beigefügten Zeichnung dargestellten Ausführungsbeispiels näher erläutert. In der Zeichnung zeigt
Fig. 1 ein Arbeitsfahrzeug mit einer erfindungsgemäßen Steuerungseinrichtung in einer schematischen Ansicht, und
Fig. 2 ein erfindungsgemäßes Steuerungsverfahren in einem schematischen Ab-Iaufplan, welches in der Steuerungseinrichtung gemäß Fig. 1 betrieben werden kann.

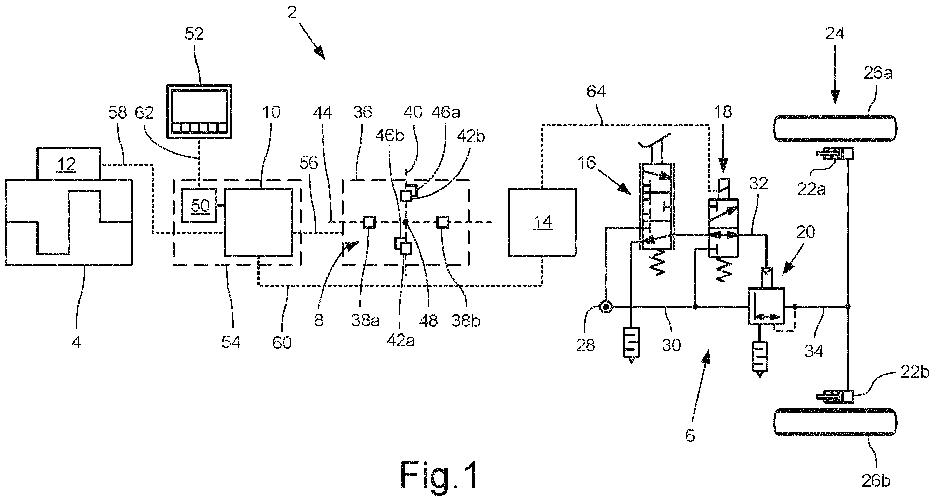

Das in Fig. 1 schematisch dargestellte Arbeitsfahrzeug 2 weist einen elektronisch steuerbaren Antriebsmotor 4, eine elektronisch steuerbare Bremsanlage 6, eine Sensoranordnung 8 zur Erfassung von Drehbewegungen und/oder Drehschwingungen um mindestens eine Bezugsachse und ein elektronisches Steuergerät 10 zur Auswertung von Sensordaten der Sensoranordnung 8 und zur Ansteuerung des Antriebsmotors 4 und/oder der Bremsanlage 6 auf. Der Antriebsmotor 4 ist vorliegend beispielhaft als ein Verbrennungsmotor ausgebildet sowie hinsichtlich seiner Leistungsabgabe und seiner Motordrehzahl mittels eines elektronischen Motorsteuergeräts 12 steuerbar.

Die in Fig. 1 nur ausschnittsweise und stark vereinfacht dargestellte Bremsanlage 6 ist vorliegend beispielhaft als eine Druckluftbremsanlage ausgebildet und umfasst ein elektronisches Bremssteuergerät 14, ein Fußbremsventil 16, ein Umschaltventil 18, ein Relaisventil 20 sowie zwei Radbremszylinder 22a, 22b, welche an den Radbremsen der Fahrzeugräder 26a, 26b einer Fahrzeugachse 24 angeordnet sind.

Die von einer Druckluftquelle 28 bereitgestellte Druckluft liegt in einer zu einem Vorratsdruckeingang des Relaisventils 20 geführten Vorratsdruckleitung 30 an. Zudem ist eine zu einem Steuerdruckeingang des Relaisventils 20 geführte Bremssteuerleitung 32 über eine Betätigung des Fußbremsventils 16 mit einem zwischen dem Vorratsdruck und dem Umgebungsdruck liegenden Steuerdruck beaufschlagbar. Der Steuerdruck wird in dem Relaisventil 20 in einen entsprechenden Bremsdruck umgewandelt, welcher in einer an den Bremsdruckausgang des Relaisventils 20 angeschlossene, an die Radbremszylinder 22a, 22b der Fahrzeugachse 24 geführte Achsbremsleitung 34 herrscht.

Das Umschaltventil 18 ist als ein 3/2-Wege-Magnetschaltventil ausgebildet, von dem Bremssteuergerät 14 ansteuerbar und in der Bremssteuerleitung 32 angeordnet. Bei einer Umschaltung des Umschaltventils 18 wird der Steuerdruckeingang des Relaisventils 20 unabhängig von der aktuellen Stellposition des Fußbremsventils 16 mit dem Vorratsdruck beaufschlagt, so dass die Radbremszylinder 22a, 22b der Fahrzeugachse 14 dann betätigt und das Arbeitsfahrzeug 2 abgebremst wird.

Die Sensoranordnung 18, die vorliegend beispielhaft ein Bestandteil eines vorhandenen ESC-Moduls 36 (Electronic Stability Control Modul) ist, weist zwei Sensoren 38a, 38b zur Messung einer Drehbewegung und/oder einer Drehschwingung um eine Querachse 40 (also zur Messung einer Nickbewegung und/oder Nickschwingung des Arbeitsfahrzeugs 2), zwei Sensoren 42a, 42b zur Erfassung einer Drehbewegung und/oder einer Drehschwingung um eine Längsachse 44 (also zur Messung einer Rollbewegung und/oder Rollschwingung des Arbeitsfahrzeugs 2) sowie zwei Sensoren 46a, 46b zur Messung einer Drehbewegung und/oder einer Drehschwingung um die Hochachse 48 des Arbeitsfahrzeugs 2 (also zur Messung einer Gierbewegung und/oder Gierschwingung) auf.

Das Steuergerät 10 steht jeweils über mindestens eine elektrische Sensorleitung 56 mit der Sensoranordnung 8, über wenigstens eine erste Steuerleitung 58 mit dem Motorsteuergerät 12 des Antriebsmotors 4 und über wenigstens eine zweite Steuerleitung 60 mit dem Bremssteuergerät 14 der Bremsanlage 6 in Verbindung. Das Bremssteuergerät 14 steht über eine dritte Steuerleitung 64 mit dem Umschaltventil 18 in Verbindung.

Dem Steuergerät 10 ist ein elektronischer Datenspeicher 50 zugeordnet, in dem Grenzwerte für eine Drehbewegung und/oder eine Drehschwingung um die Querachse 40, um die Längsachse 44 und um die Hochachse 48 des Arbeitsfahrzeugs 2 abgespeichert sind.

Das elektronische Steuergerät 10 ist dazu ausgebildet, um aus den gemessenen Drehbewegungen und/oder Drehschwingungen Kennwerte für die jeweilige Drehbewegung beziehungsweise Drehschwingung um die Querachse 40, um die Längsachse 44 und um die Hochachse 48 des Arbeitsfahrzeugs 2 zu bestimmen, und um in Abhängigkeit von mindestens einem bestimmten dieser Kennwerte für eine gemessene Drehbewegung und/oder Drehschwingung und des zugeordneten Grenzwertes zu entscheiden, ob eine Verringerung der Fahrgeschwindigkeit erforderlich ist oder nicht.

Bei positiver Entscheidung wird der Antriebsmotor 4 und/oder die Bremsanlage 6 von dem Steuergerät 10 derart angesteuert, dass die Fahrgeschwindigkeit des Arbeitsfahrzeugs 2 bis zum Erreichen oder Unterschreiten des betreffenden Grenzwertes durch den Kennwert reduziert wird. Die Reduzierung der Fahrgeschwindigkeit des Arbeitsfahrzeugs 2 erfolgt durch eine Absenkung des von dem Antriebsmotor 4 abgegebenen Drehmomentes und/oder durch eine Absenkung der Motordrehzahl und/oder durch eine Belüftung der Radbremszylinder 22a, 22b der Fahrzeugachse 24, sodass diese bremswirksam sind.

Die Grenzwerte für eine Drehbewegung und/oder eine Drehschwingung um die Querachse 40, um die Längsachse 44 und um die Hochachse 48 des Arbeitsfahrzeugs 2 können anhand von sensorisch erfassten Messwerten selbsttätig bestimmt sowie durch eine Erkennung des an dem Arbeitsfahrzeug 2 angebauten Arbeitsgerätes als Kennwert in dem Datenspeicher 50 abgespeichert werden.

Zusätzlich ist in dem in Fig. 1 gezeigten Beispiel auch ein Eingabegerät 52 vorhanden, welches an den Datenspeicher 50 über eine Datenleitung 62 angeschlossen ist. An dem Eingabegerät 52 kann ein Fahrer das an das Arbeitsfahrzeug 2 angebaute Arbeitsgerät mittels einer eingegebenen Kennung identifizieren. Außerdem kann der Fahrer die Beschaffenheit des zu befahrenden Geländes sowie die Grenzwerte für eine Drehbewegung und/oder Drehschwingung um die Querachse 40, um die Längsachse 44 und um die Hochachse 48 des Arbeitsfahrzeugs 2 manuell eingeben sowie in dem elektronischen Datenspeicher 50 abspeichern. Das Steuergerät 10 und der Datenspeicher 50 sind vorliegend beispielhaft in einer Geschwindigkeitsregelanlage 54 des Arbeitsfahrzeugs 2 integriert.

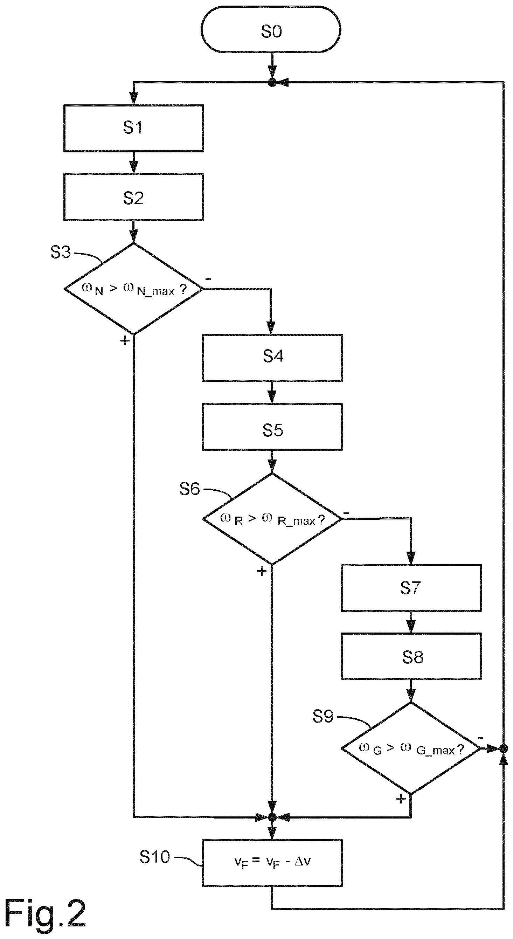

Nachfolgend wird anhand des in Fig. 2 abgebildeten Ablaufplans der Steuerungsablauf zur sensorischen Messung und Dämpfung von Drehbewegungen und/oder Drehschwingungen des Arbeitsfahrzeugs 2 um dessen Querachse 40, um Längsachse 44 und um Hochachse 48 beispielhaft erläutert.

Zunächst werden nach dem Start S0 des Verfahrens in Verfahrensschritt S1 durch Auswertung der Sensorsignale der Sensoren 38a, 38b Drehbewegungen und/oder Drehschwingungen des Arbeitsfahrzeugs 2 um die Querachse 40 des Arbeitsfahrzeugs 2 gemessen und daraus im Verfahrensschritt S2 diesbezügliche Kennwerte bestimmt, hier beispielhaft eine Drehgeschwindigkeit um die Querachse 40, also eine Nickgeschwindigkeit ω_{N}.

In dem nachfolgenden Verfahrensschritt S3 wird geprüft, ob die aktuelle Nickgeschwindigkeit ω_{N} einen vorgegebenen Grenzwert für die Nickgeschwindigkeit ω_{N_max} übertrifft. Wenn dies zutrifft, wird zu Verfahrensschritt S10 verzweigt, in dem die Fahrgeschwindigkeit v_{F} des Arbeitsfahrzeugs 2 um eine festgelegte Geschwindigkeitsdifferenz Δv verringert wird. Dies erfolgt hier durch eine Reduzierung des abgegebenen Drehmomentes des Antriebsmotors 4 und/oder durch eine Betätigung der Radbremsen an der Fahrzeugachse 24. Danach wird zurück vor den Verfahrensschritt S1 verzweigt.

Bei negativem Ergebnis der Prüfung im Verfahrensschritt S3, also bei keiner Überschreitung des vorgegebenen Grenzwertes für die Nickgeschwindigkeit ω_{N_max} durch die aktuelle Nickgeschwindigkeit ω_{N}, werden in Verfahrensschritt S4 durch Auswertung der Sensorsignale der Sensoren 42a, 42b Drehbewegungen und/oder Drehschwingungen des Arbeitsfahrzeugs 2 um dessen Längsachse 44 gemessen und daraus in einem Verfahrensschritt S5 Kennwerte, hier beispielhaft eine Drehgeschwindigkeit um die Längsachse 44 des Arbeitsfahrzeugs 2, also eine Rollgeschwindigkeit ω_{R}, bestimmt. In dem nachfolgenden Verfahrensschritt S6 wird geprüft, ob die aktuelle Rollgeschwindigkeit ω_{R} einen vorgegebenen Grenzwert für die Rollgeschwindigkeit ω_{R_max} übertrifft. Wenn dies zutrifft, wird zu dem Verfahrensschritt S10 verzweigt, in dem die Fahrgeschwindigkeit v_{F} des Arbeitsfahrzeugs 2 wie schon erläutert um die festgelegte Geschwindigkeitsdifferenz Δv reduziert wird. Danach wird zurück vor den Verfahrensschritt S1 verzweigt.

Bei negativem Ergebnis der Prüfung im Verfahrensschritt S6, also bei keiner Überschreitung des vorgegebenen Grenzwertes für die Rollgeschwindigkeit ω_{R_max} durch die aktuelle Rollgeschwindigkeit ω_{R}, werden in einem Verfahrensschritt S7 durch Auswertung der Sensorsignale der Sensoren 46a, 46b Drehbewegungen und/oder Drehschwingungen des Arbeitsfahrzeugs 2 um dessen Hochachse 48 gemessen und daraus in einem Verfahrensschritt S8 Kennwerte, hier beispielhaft eine Drehgeschwindigkeit um die Hochachse 48 des Arbeitsfahrzeugs 2, also eine Giergeschwindigkeit ω_{G} bestimmt. In dem nachfolgenden Verfahrensschritt S9 wird geprüft, ob die aktuelle Giergeschwindigkeit ω_{G} einen vorgegebenen Grenzwert für die Giergeschwindigkeit ω_{G_max} übertrifft. Wenn dies zutrifft, wird zu Verfahrensschritt S10 verzweigt, in dem die Fahrgeschwindigkeit v_{F} des Arbeitsfahrzeugs 2 um die festgelegte Geschwindigkeitsdifferenz Δv wie beschrieben reduziert wird. Danach wird zurück zu dem Verfahrensschritt S1 verzweigt. Bei negativem Ergebnis der Prüfung in Verfahrensschritt S9, also bei keiner Überschreitung des vorgegebenen Grenzwertes für die Giergeschwindigkeit ω_{G_max} durch die aktuelle Giergeschwindigkeit ω_{G}, wird unmittelbar zurück zu dem Verfahrensschritt S1 verzweigt.

Das Steuerungsverfahren wird zu Beginn einer Arbeitsfahrt des Arbeitsfahrzeugs 2 mit angebautem Arbeitsgerät aktiviert und während der Arbeitsfahrt permanent oder in einem festgelegten Zeittakt durchlaufen.

### Bezugszeichenliste (Bestandteil der Beschreibung)

- 2: Arbeitsfahrzeug
- 4: Antriebsmotor, Verbrennungsmotor
- 6: Bremsanlage, Druckluftbremsanlage
- 8: Sensoranordnung
- 10: Elektronisches Steuergerät
- 12: Motorsteuergerät
- 14: Bremssteuergerät
- 16: Fußbremsventil
- 18: Umschaltventil
- 20: Relaisventil
- 22a, 22b: Radbremszylinder
- 24: Fahrzeugachse
- 26a, 26b: Fahrzeugrad
- 28: Druckluftquelle
- 30: Vorratsdruckleitung
- 32: Bremssteuerleitung
- 34: Achsbremsleitung
- 36: ESC-Modul (Electronic Stability Control Modul)
- 38a, 38b: Zwei Sensoren an der Querachse des Arbeitsfahrzeugs
- 40: Querachse des Arbeitsfahrzeugs, erste Bezugsachse
- 42a, 42b: Zwei Sensoren an der Längsachse des Arbeitsfahrzeugs
- 44: Längsachse des Arbeitsfahrzeugs, zweite Bezugsachse
- 46a, 46b: Zwei Sensoren an der Hochachse des Arbeitsfahrzeugs
- 48: Hochachse des Arbeitsfahrzeugs, dritte Bezugsachse
- 50: Datenspeicher
- 52: Eingabegerät
- 54: Geschwindigkeitsregelanlage
- 56: Sensorleitung
- 58: Erste Steuerleitung
- 60: Zweite Steuerleitung
- 62: Datenleitung
- 64: Dritte Steuerleitung
- ESC: Electronic Stability Control, elektronische Fahrstabilisierung
- RMS: Root Mean Square, quadratischer Mittelwert
- S0 - S10: Verfahrensschritte
- v_{F}: Fahrgeschwindigkeit
- Δv: Geschwindigkeitsdifferenz
- ω_{G}: Giergeschwindigkeit
- ω_{G_max}: Grenzwert für Giergeschwindigkeit
- ω_{N}: Nickgeschwindigkeit
- ω_{N_max}: Grenzwert für Nickgeschwindigkeit
- ω_{R}: Rollgeschwindigkeit
- ω_{R_max}: Grenzwert für Rollgeschwindigkeit

## Patentansprüche

1. Arbeitsfahrzeug (2) für den Einsatz in der Landwirtschaft, an dessen Fahrzeugfront und/oder Fahrzeugheck ein seitlich ausladendes Arbeitsgerät montierbar ist, mit einem elektronisch steuerbaren Antriebsmotor (4), einer elektronisch steuerbaren Bremsanlage (6), einer Sensoranordnung (8) zur Messung von Drehbewegungen und/oder Drehschwingungen um mindestens eine Bezugsachse (40, 44, 48) des Arbeitsfahrzeugs (2), und mit einem elektronischen Steuergerät (10) zur Auswertung von Sensordaten der Sensoranordnung (8) sowie zur Ansteuerung des Antriebsmotors (4) und/oder der Bremsanlage (6), wobei die Sensoranordnung (8) mindestens einen Sensor (38a, 38b) zur Messung von Drehbewegungen und/oder Drehschwingungen um die Querachse (40) des Arbeitsfahrzeugs (2), mindestens einen Sensor (42a, 42b) zur Messung von Drehbewegungen und/oder Drehschwingungen um die Längsachse (44) des Arbeitsfahrzeugs (2) sowie mindestens einen Sensor (46a, 46b) zur Messung von Drehbewegungen und/oder Drehschwingungen um die Hochachse (48) des Arbeitsfahrzeugs (2) aufweist, dem elektronischen Steuergerät (10) ein elektronischer Datenspeicher (50) zugeordnet ist, in dem Grenzwerte (ω_{N_max}, ω_{R_max}, ω_{G_max}) für eine Drehbewegung und/oder eine Drehschwingung um die Querachse (40), um die Längsachse (44) und um die Hochachse (48) abgespeichert sind, und das elektronische Steuergerät (10) derartig ausgebildet ist, dass es aus den sensorisch erfassten Messwerten von Drehbewegungen und/oder Drehschwingungen diesbezügliche Kennwerte (ω_{N}, ω_{R}, ω_{G}) für die jeweilige Drehbewegung beziehungsweise Drehschwingung um die Querachse (40), um die Längsachse (44) und um die Hochachse (48) bestimmen kann, es in Abhängigkeit von mindestens einem dieser Kennwerte (ω_{N}, ω_{R}, ω_{G}) und des zugeordneten Grenzwertes (ω_{N_max}, ω_{R_max}, ω_{G_max}) entscheiden kann, ob eine Verringerung der Fahrgeschwindigkeit (v_{F}) erforderlich ist, und dass bei einer diesbezüglich positiven Entscheidung den Antriebsmotor (4) und/oder die Bremsanlage (6) derart ansteuern kann, dass die Fahrgeschwindigkeit (v_{F}) bis zum Erreichen oder Unterschreiten des betreffenden Grenzwertes (ω_{N_max}, ω_{R_max}, ω_{G_max}) durch den Kennwert (ω_{N}, ω_{R}, ω_{G}) reduziert wird.

2. Arbeitsfahrzeug nach Anspruch 1, **dadurch gekennzeichnet, dass** das elektronische Steuergerät (10) derart ausgebildet ist, dass es die Grenzwerte (ω_{N_max}, ω_{R_max}, ω_{G_max}) für eine Drehbewegung und/oder eine Drehschwingung um die Querachse (40), um die Längsachse (44) und um die Hochachse (48) des Arbeitsfahrzeugs (2) anhand von sensorisch erfassten Daten selbsttätig bestimmen sowie eine Erkennung des jeweils angebauten Arbeitsgerätes selbsttätig durchführen und in dem elektronischen Datenspeicher (50) abspeichern kann.

3. Arbeitsfahrzeug nach Anspruch 1 oder 2, **dadurch gekennzeichnet, dass** ein Eingabegerät (52) vorgesehen ist, in das ein Fahrer des Arbeitsfahrzeugs (2) eine Kennung des angebauten Arbeitsgeräts, die Beschaffenheit des zu befahrenden Geländes sowie die Grenzwerte (ω_{N_max}, ω_{R_max}, ω_{G_max}) für eine Drehbewegung und/oder Drehschwingung um die Querachse (40), um die Längsachse (44) und um die Hochachse (48) des Arbeitsfahrzeugs (2) manuell eingeben sowie in dem elektronischen Datenspeicher (50) abspeichern kann.

4. Arbeitsfahrzeug nach einem der Ansprüche 1 bis 3, **dadurch gekennzeichnet, dass** die Sensoranordnung (48) zur Messung von Drehbewegungen und/oder Drehschwingungen um die Querachse (40), um die Längsachse (44) und um die Hochachse (48) des Arbeitsfahrzeugs (2) ein Bestandteil eines vorhandenen Electronic Stability Control-Moduls (36) ist.

5. Arbeitsfahrzeug nach einem der Ansprüche 1 bis 4, **dadurch gekennzeichnet, dass** das elektronische Steuergerät (10) oder die Steuerungsfunktion zur Messung von Drehbewegungen und/oder Drehschwingungen um die Querachse (40), um die Längsachse (44) und um die Hochachse (48) des Arbeitsfahrzeugs (2) in eine vorhandene Geschwindigkeitsregelanlage (54) integriert ist.

6. Verfahren zur Steuerung eines Arbeitsfahrzeug (2) für den Einsatz in der Landwirtschaft, an dessen Fahrzeugfront und/oder Fahrzeugheck ein seitlich ausladendes Arbeitsgerät montierbar ist, mit einem elektronisch steuerbaren Antriebsmotor (4), einer elektronisch steuerbaren Bremsanlage (6), einer Sensoranordnung (8) zur Erfassung von Drehbewegungen und/oder Drehschwingungen um mindestens eine der Bezugsachsen (40, 44, 48) des Arbeitsfahrzeugs (2) und mit einem elektronischen Steuergerät (10) zur Auswertung von Sensordaten der Sensoranordnung (8) sowie zur Ansteuerung des Antriebsmotors (4) und/oder der Bremsanlage (6), wobei eine Drehbewegung und/oder eine Drehschwingung um die Querachse (40), um die Längsachse (44) und um die Hochachse (48) des Arbeitsfahrzeugs (2) sensorisch gemessen werden, jeweils ein Kennwert (ω_{N}, ω_{R}, ω_{G}) der gemessenen Drehbewegung und/oder Drehschwingung bestimmt wird, wobei dann dieser Kennwert (ω_{N}, ω_{R}, ω_{G}) mit einem vorgegebenen Grenzwert (ω_{N_max}, ω_{R_max}, ω_{G_max}) verglichen wird, und dass dann, wenn der Kennwert (ω_{N}, ω_{R}, ω_{G}) den Grenzwert (ω_{N_max}, ω_{R_max}, ω_{G_max}) überschreitet, die Fahrgeschwindigkeit (v_{F}) des Arbeitsfahrzeugs (2) so lange reduziert wird, bis der Kennwert (ω_{N}, ω_{R}, ω_{G}) den Grenzwert (ω_{N_max}, ω_{R_max}, ω_{G_max}) erreicht oder unterschritten hat.

7. Verfahren nach Anspruch 6, **dadurch gekennzeichnet, dass** der Kennwert der gemessenen Drehbewegung um die Querachse (40), um die Längsachse (44) und um die Hochachse (48) des Arbeitsfahrzeugs (2) jeweils als Drehgeschwindigkeit (ω_{N}, ω_{R}, ω_{G}) oder als Drehbeschleunigung der Drehbewegung bestimmt und mit einem als Grenzdrehgeschwindigkeit (ω_{N_max}, ω_{R_max}, ω_{G_max}) oder als Grenzdrehbeschleunigung vorgegebenen Grenzwert verglichen wird.

8. Verfahren nach Anspruch 6 oder 7, **dadurch gekennzeichnet, dass** der Kennwert der gemessenen Drehbewegung um die Querachse (40), um die Längsachse (44) und um die Hochachse (48) des Arbeitsfahrzeugs (2) jeweils als Schwingungsamplitude oder als RMS-Wert (quadratischer Mittelwert) der Drehschwingung bestimmt sowie mit einem als Grenzschwingungsamplitude oder als RMS-Grenzwert vorgegebenen Grenzwert verglichen wird.

9. Verfahren nach Anspruch 7 oder 8, **dadurch gekennzeichnet, dass** die Sensorsignale zu der gemessenen Drehbewegung und/oder Drehschwingung um die Querachse (40), um die Längsachse (44) und um die Hochachse (48) des Arbeitsfahrzeugs (2) vor deren Auswertung in dem elektronischen Steuergerät (10) jeweils tiefpassgefiltert werden.

10. Verfahren nach einem der Ansprüche 6 bis 9, **dadurch gekennzeichnet, dass** die Fahrgeschwindigkeit (v_{F}) des Arbeitsfahrzeugs (2) kontinuierlich reduziert wird, bis der Kennwert (ω_{N}, ω_{R}, ω_{G}) der Drehbewegung und/oder der Drehschwingung den zugeordneten Grenzwert (ω_{N_max}, ω_{R_max}, ω_{G_max}) erreicht oder unterschritten hat.

11. Verfahren nach einem der Ansprüche 6 bis 9, **dadurch gekennzeichnet, dass** die Fahrgeschwindigkeit (v_{F}) des Arbeitsfahrzeugs (2) stufenweise reduziert wird, bis der Kennwert (ω_{N}, ω_{R}, ω_{G}) der Drehbewegung und/oder der Drehschwingung den zugeordneten Grenzwert (ω_{N_max}, ω_{R_max}, ω_{G_max}) erreicht oder unterschritten hat.

12. Verfahren nach einem der Ansprüche 6 bis 11, **dadurch gekennzeichnet, dass** zur Reduzierung der Fahrgeschwindigkeit (v_{F}) des Arbeitsfahrzeugs (2) das von dem Antriebsmotor (4) abgegebene Drehmoment und/oder die Motordrehzahl des Antriebsmotors (4) verringert wird.

13. Verfahren nach einem der Ansprüche 6 bis 12, **dadurch gekennzeichnet, dass** die Fahrgeschwindigkeit (v_{F}) des Arbeitsfahrzeugs (2) durch eine solche Ansteuerung der Bremsanlage (6) reduziert wird, welche zu einer Betätigung der Betriebsbremsen mindestens eines Bremskreises der Bremsanlage (6) führt.

## Claims

1. Working vehicle (2) for use in agriculture, a laterally protruding implement being able to be mounted on the vehicle front and/or vehicle rear thereof, having an electronically controllable drive motor (4), an electronically controllable brake system (6), a sensor arrangement (8) for measuring rotational movements and/or rotational oscillations about at least one reference axis (40, 44, 48) of the working vehicle (2), and having an electronic control device (10) for evaluating sensor data of the sensor arrangement (8) and for activating the drive motor (4) and/or the brake system (6), wherein the sensor arrangement (8) comprises at least one sensor (38a, 38b) for measuring rotational movements and/or rotational oscillations about the transverse axis (40) of the working vehicle (2), at least one sensor (42a, 42b) for measuring rotational movements and/or rotational oscillations about the longitudinal axis (44) of the working vehicle (2) and at least one sensor (46a, 46b) for measuring rotational movements and/or rotational oscillations about the vertical axis (48) of the working vehicle (2), an electronic data store (50) is assigned to the electronic control device (10), threshold values (ω_{N_max}, ω_{R_max}, ω_{G_max}) for a rotational movement and/or a rotational oscillation about the transverse axis (40), about the longitudinal axis (44) and about the vertical axis (48) being stored therein, and the electronic control device (10) is configured such that it is able to determine, from the measured values of rotational movements and/or rotational oscillations detected by sensor, characteristic values (ω_{N}, ω_{R}, ω_{G}) relevant thereto for the respective rotational movement and/or rotational oscillation about the transverse axis (40), about the longitudinal axis (44) and about the vertical axis (48), that as a function of at least one of these characteristic values (ω_{N}, ω_{R}, ω_{G}) and the assigned threshold value (ω_{N_max}, ω_{R_max}, ω_{G}_ₘₐₓ) said electronic control device is able to decide whether a reduction in travel speed (V_{F}) is required and that in the case of a positive decision relative thereto said electronic control device is able to activate the drive motor (4) and/or the brake system (6) such that the travel speed (V_{F}) is reduced until the characteristic value (ω_{N}, ω_{R}, ω_{G}) reaches or falls below the relevant threshold value (ω_{N_max}, ω_{R_max}, ω_{G_max}).

2. Working vehicle according to Claim 1, **characterized in that** the electronic control device (10) is configured such that it is able to determine automatically the threshold values (ω_{N_max}, ω_{R_max}, ω_{G_max}) for a rotational movement and/or a rotational oscillation about the transverse axis (40), about the longitudinal axis (44) and about the vertical axis (48) of the working vehicle (2) using data detected by sensor, and is able to perform automatically an identification of the respectively fitted implement and store this in the electronic data store (50).

3. Working vehicle according to Claim 1 or 2, **characterized in that** an input device (52) is provided into which a driver of the working vehicle (2) may manually input an identifier of the fitted implement, the nature of the terrain to be travelled over and the threshold values (ω_{N}_ₘₐₓ, ω_{R_max}, ω_{G}_ₘₐₓ) for a rotational movement and/or rotational oscillation about the transverse axis (40), about the longitudinal axis (44) and about the vertical axis (48) of the working vehicle (2) and store this in the electronic data store (50).

4. Working vehicle according to one of Claims 1 to 3, **characterized in that** the sensor arrangement (48) is a component of an existing electronic stability control module (36) for measuring rotational movements and/or rotational oscillations about the transverse axis (40), about the longitudinal axis (44) and about the vertical axis (48) of the working vehicle (2).

5. Working vehicle according to one of Claims 1 to 4, **characterized in that** the electronic control device (10) or the control function for measuring rotational movements and/or rotational oscillations about the transverse axis (40), about the longitudinal axis (44) and about the vertical axis (48) of the working vehicle (2) is integrated in an existing speed control system (54) .

6. Method for controlling a working vehicle (2) for use in agriculture, a laterally protruding implement being able to be mounted on the vehicle front and/or vehicle rear thereof, having an electronically controllable drive motor (4), an electronically controllable brake system (6), a sensor arrangement (8) for detecting rotational movements and/or rotational oscillations about at least one of the reference axes (40, 44, 48) of the working vehicle (2), and having an electronic control device (10) for evaluating sensor data of the sensor arrangement (8) and for activating the drive motor (4) and/or the brake system (6), wherein a rotational movement and/or a rotational oscillation about the transverse axis (40), about the longitudinal axis (44) and about the vertical axis (48) of the working vehicle (2) are measured by sensor, and in each case a characteristic value (ω_{N}, ω_{R}, ω_{G}) of the measured rotational movement and/or rotational oscillation is determined, wherein said characteristic value (ω_{N}, ω_{R}, ω_{G}) is then compared with a predetermined threshold value (ω_{N_max}, ω_{R_max}, ω_{G_max}), and when the characteristic value (ω_{N}, ω_{R}, ω_{G}) exceeds the threshold value (ω_{N_max}, ω_{R_max}, ω_{G_max}) the travel speed (V_{F}) of the working vehicle (2) is reduced until the characteristic value (ω_{N}, ω_{R}, ω_{G}) has reached or fallen below the threshold value (ω_{N_max}, ω_{R_max}, ω_{G_max}).

7. Method according to Claim 6, **characterized in that** the characteristic value of the measured rotational movement about the transverse axis (40), about the longitudinal axis (44) and about the vertical axis (48) of the working vehicle (2) is in each case determined as rotational velocity (ω_{N}, ω_{R}, ω_{G}) or as rotational acceleration of the rotational movement and is compared with a threshold value which is predetermined as threshold rotational velocity (ω_{N_max}, ω_{R_max}, (ω_{G_max}) or as threshold rotational acceleration.

8. Method according to Claim 6 or 7, **characterized in that** the characteristic value of the measured rotational movement about the transverse axis (40), about the longitudinal axis (44) and about the vertical axis (48) of the working vehicle (2) in each case is determined as an oscillation amplitude or as an RMS value of the rotational oscillation and is compared with a threshold value predetermined as a threshold oscillation amplitude or as an RMS threshold value.

9. Method according to Claim 7 or 8, **characterized in that** the sensor signals for the measured rotational movement and/or rotational oscillation about the transverse axis (40), about the longitudinal axis (44) and about the vertical axis (48) of the working vehicle (2) are in each case low-pass filtered before the evaluation thereof in the electronic control device (10) .

10. Method according to one of Claims 6 to 9, **characterized in that** the travel speed (V_{F}) of the working vehicle (2) is continuously reduced until the characteristic value (ω_{N}, ω_{R}, ω_{G}) of the rotational movement and/or the rotational oscillation has reached or fallen below the assigned threshold value (ω_{N_max}, ω_{R_max}, ω_{G_max}).

11. Method according to one of Claims 6 to 9, **characterized in that** the travel speed (V_{F}) of the working vehicle (2) is reduced in a stepwise manner until the characteristic value (ω_{N}, ω_{R}, ω_{G}) of the rotational movement and/or the rotational oscillation has reached or fallen below the assigned threshold value (ω_{N_max}, ω_{R_max}, ω_{G_max}).

12. Method according to one of Claims 6 to 11, **characterized in that** for reducing the travel speed (V_{F}) of the working vehicle (2), the torque output from the drive motor (4) and/or the engine speed of the drive motor (4) is reduced.

13. Method according to one of Claims 6 to 12, **characterized in that** the travel speed (V_{F}) of the working vehicle (2) is reduced by such an activation of the brake system (6) which leads to an actuation of the service brakes of at least one brake circuit of the brake system (6).

## Revendications

1. Véhicule de travail (2) destiné à être utilisé dans l'agriculture, sur l'avant de véhicule et/ou l'arrière de véhicule duquel peut être monté un outil de travail faisant saillie latéralement, comportant un moteur d'entraînement (4) pouvant être commandé de manière électronique, un système de freinage (6) pouvant être commandé de manière électronique, un ensemble de capteurs (8) servant à la mesure de mouvements rotatifs et/ou d'oscillations rotatives autour d'au moins un axe de référence (40, 44, 48) du véhicule de travail (2), et comportant un appareil de commande (10) électronique servant à l'évaluation de données de capteur de l'ensemble de capteurs (8) et servant à la commande du moteur d'entraînement (4) et/ou du système de freinage (6), l'ensemble de capteurs (8) présentant au moins un capteur (38a, 38b) servant à la mesure de mouvements rotatifs et/ou d'oscillations rotatives autour de l'axe transversal (40) du véhicule de travail (2), au moins un capteur (42a, 42b) servant à la mesure de mouvements rotatifs et/ou d'oscillations rotatives autour de l'axe longitudinal (44) du véhicule de travail (2) ainsi qu'au moins un capteur (46a, 46b) servant à la mesure de mouvements rotatifs et/ou d'oscillations rotatives autour de l'axe vertical (48) du véhicule de travail (2), une mémoire de données (50) électronique étant associée à l'appareil de commande (10) électronique, mémoire dans laquelle des valeurs limites (ω_{N_max}, ω_{R_max}, ω_{G_max}) pour un mouvement rotatif et/ou une oscillation rotative autour de l'axe transversal (40), autour de l'axe longitudinal (44) et autour de l'axe vertical (48) sont mémorisées, et l'appareil de commande (10) électronique étant configuré de telle sorte qu'il peut déterminer, à partir des valeurs de mesure, détectées par capteur, de mouvements rotatifs et/ou d'oscillations rotatives, des valeurs caractéristiques (ω_{N}, ω_{R}, ω_{G}) pertinentes pour le mouvement rotatif ou l'oscillation rotative respectif/respective autour de l'axe transversal (40), autour de l'axe longitudinal (44) et autour de l'axe vertical (48), qu'il peut décider, en fonction d'au moins une de ces valeurs caractéristiques (ω_{N}, ω_{R}, ω_{G}) et de la valeur limite (ω_{N_max}, ω_{R_max}, ω_{G_max}) associée, si une réduction de la vitesse de conduite (v_{F}) est nécessaire, et qu'en cas de décision positive pertinente, il peut commander le moteur d'entraînement (4) et/ou le système de freinage (6) de telle sorte que la vitesse de conduite (v_{F}) soit réduite jusqu'à ce que la valeur caractéristique (ω_{N}, ω_{R}, ω_{G}) atteigne ou passe en-dessous de la valeur limite (ω_{N_max}, ω_{R_max}, ω_{G_max}) concernée.

2. Véhicule de travail selon la revendication 1, **caractérisé en ce que** l'appareil de commande (10) électronique est configuré de telle sorte qu'il peut déterminer automatiquement les valeurs limites (ω_{N_max}, ω_{R max}, ω_{G_max}) pour un mouvement rotatif et/ou une oscillation rotative autour de l'axe transversal (40), autour de l'axe longitudinal (44) et autour de l'axe vertical (48) du véhicule de travail (2) sur la base de données détectées par capteur et effectuer automatiquement une identification de l'outil de travail respectivement installé et les mémoriser dans la mémoire de données (50) électronique.

3. Véhicule de travail selon la revendication 1 ou 2, **caractérisé en ce qu'**un appareil d'entrée (52) est prévu, dans lequel un conducteur du véhicule de travail (2) peut entrer manuellement une identification de l'outil de travail installé, l'état du terrain à parcourir ainsi que les valeurs limites (ω_{N_max}, ω_{R_max}, ω_{G_max}) pour un mouvement rotatif et/ou une oscillation rotative autour de l'axe transversal (40), autour de l'axe longitudinal (44) et autour de l'axe vertical (48) du véhicule de travail (2) ainsi que pour les mémoriser dans la mémoire de données (50) électronique.

4. Véhicule de travail selon l'une des revendications 1 à 3, **caractérisé en ce que** l'ensemble de capteurs (48) servant à la mesure de mouvements rotatifs et/ou d'oscillations rotatives autour de l'axe transversal (40), autour de l'axe longitudinal (44) et autour de l'axe vertical (48) du véhicule de travail (2) fait partie d'un module de contrôle électronique de la stabilité (36) existant.

5. Véhicule de travail selon l'une des revendications 1 à 4, **caractérisé en ce que** l'appareil de commande (10) électronique ou la fonction de commande servant à la mesure de mouvements rotatifs et/ou d'oscillations rotatives autour de l'axe transversal (40), autour de l'axe longitudinal (44) et autour de l'axe vertical (48) du véhicule de travail (2) est intégré(e) dans un système de régulation de vitesse (54) existant.

6. Procédé de commande d'un véhicule de travail (2) destiné à être utilisé dans l'agriculture, sur l'avant de véhicule et/ou l'arrière de véhicule duquel peut être monté un outil de travail faisant saillie latéralement, comportant un moteur d'entraînement (4) pouvant être commandé de manière électronique, un système de freinage (6) pouvant être commandé de manière électronique, un ensemble de capteurs (8) servant à la détection de mouvements rotatifs et/ou d'oscillations rotatives autour d'au moins l'un des axes de référence (40, 44, 48) du véhicule de travail (2) et comportant un appareil de commande (10) électronique servant à l'évaluation de données de capteur de l'ensemble de capteurs (8) et servant à la commande du moteur d'entraînement (4) et/ou du système de freinage (6), un mouvement rotatif et/ou une oscillation rotative autour de l'axe transversal (40), autour de l'axe longitudinal (44) et autour de l'axe vertical (48) du véhicule de travail (2) étant mesuré(e) (s) par capteur, une valeur caractéristique (ω_{N}, (ω_{R}, ω_{G}) du mouvement rotatif et/ou de l'oscillation rotative mesuré(e) (s) étant déterminée respectivement, cette valeur caractéristique (ω_{N}, ω_{R}, ω_{G}) étant ensuite comparée à une valeur limite (ω_{N_max}, (ω_{R_max}, ω_{G_max}) prédéfinie, et ensuite, si la valeur caractéristique ω_{N}, ω_{R}, ω_{G}) dépasse la valeur limite (ω_{N_max}, ω_{R_max}, ω_{G_max}), la vitesse de conduite (v_{F}) du véhicule de travail (2) étant réduite jusqu'à ce que la valeur caractéristique (ω_{N}, ω_{R}, ω_{G}) ait atteint ou soit passée en-dessous de la valeur limite (ω_{N_}max, ω_{R_}max, ω_{G_max}) .

7. Procédé selon la revendication 6, **caractérisé en ce que** la valeur caractéristique du mouvement rotatif mesuré autour de l'axe transversal (40), autour de l'axe longitudinal (44) et autour de l'axe vertical (48) du véhicule de travail (2) est déterminée respectivement en tant que vitesse de rotation (ω_{N}, ω_{R}, ω_{G}) ou en tant qu'accélération de rotation du mouvement rotatif et est comparée à une valeur limite prédéfinie en tant que vitesse de rotation limite (ω_{N_max}, ω_{R_max}, ω_{G_max}) ou en tant qu'accélération de rotation limite.

8. Procédé selon la revendication 6 ou 7, **caractérisé en ce que** la valeur caractéristique du mouvement rotatif mesuré autour de l'axe transversal (40), autour de l'axe longitudinal (44) et autour de l'axe vertical (48) du véhicule de travail (2) est déterminée respectivement en tant qu'amplitude d'oscillation ou en tant que valeur RMS (valeur quadratique moyenne) de l'oscillation rotative et est comparée à une valeur limite prédéfinie en tant qu'amplitude d'oscillation limite ou en tant que valeur limite RMS.

9. Procédé selon la revendication 7 ou 8, **caractérisé en ce que** les signaux de capteur pour le mouvement rotatif et/ou l'oscillation rotative mesuré(e) (s) autour de l'axe transversal (40), autour de l'axe longitudinal (44) et autour de l'axe vertical (48) du véhicule de travail (2) sont respectivement soumis à un filtrage passe-bas avant leur évaluation dans l'appareil de commande (10) électronique.

10. Procédé selon l'une des revendications 6 à 9, **caractérisé en ce que** la vitesse de conduite (v_{F}) du véhicule de travail (2) est réduite de manière continue, jusqu'à ce que la valeur caractéristique (ω_{N}, ω_{R}, ω_{G}) du mouvement rotatif et/ou de l'oscillation rotative ait atteint ou soit passée en dessous de la valeur limite (ω_{N_max}, ω_{R_}max, ω_{G_max}) associée.

11. Procédé selon l'une des revendications 6 à 9, **caractérisé en ce que** la vitesse de conduite (v_{F}) du véhicule de travail (2) est réduite graduellement, jusqu'à ce que la valeur caractéristique (ω_{N}, ω_{R}, ω_{G}) du mouvement rotatif et/ou de l'oscillation rotative ait atteint ou soit passée en dessous de la valeur limite (ω_{N_max}, ω_{R_}max, ω_{G max}) associée.

12. Procédé selon l'une des revendications 6 à 11, **caractérisé en ce que**, pour la réduction de la vitesse de conduite (v_{F}) du véhicule de travail (2), le couple fourni par le moteur d'entraînement (4) et/ou le régime de moteur du moteur d'entraînement (4) est/sont réduit(s) .

13. Procédé selon l'une des revendications 6 à 12, **caractérisé en ce que** la vitesse de conduite (v_{F}) du véhicule de travail (2) est réduite par le biais d'une commande du système de freinage (6) telle qu'elle mène à un actionnement du frein de service d'au moins un circuit de freinage du système de freinage (6).
